# EUROPEAN PATENT APPLICATION

(11) **EP 4 793 520 A1**
(43) Date of publication of application: **19.08.2026**
(21) Application number: 26158776.0
(22) Date of filing: 16.02.2026
(51) Int. Cl.: F16D 65/06, B61H 1/00, F16D 69/04

(54) **FRICTION SHOE**

(30) Priority: 17.02.2025 US 202563759453 P
(71) Applicant: Transportation IP Holdings, LLC, Norwalk, CT 06851 (US)
(72) Inventor: Bowden, A. Gary, Laurinburg, NC, 28352 (US); Sugg, James Wesley, Pinehurst, NC, 28374 (US); Griffin, Shawn, Erie, PA, 06851 (US)
(74) Representative: K&L Gates LLP

(57) **Abstract**

A friction shoe includes a backing plate, plural spaced-apart inserts, and a composite body. The backing plate has a top side, an under side, a long axis, and a cross axis that is perpendicular to the long axis. A width of the backing plate along the cross axis is shorter than a length of the backing plate along the long axis. The plural spaced-apart inserts are attached to the under side of the backing plate. The backing plate and plural inserts are integrally made of a metal material. The composite body is attached to the backing plate and at least partially disposed between and around the plural inserts.

## Description

### CROSS-REFERENCE TO RELATED APPLICATION

This application claims priority to U.S. Provisional Application No. 63/759,453 (filed February 17, 2025), the entire disclosure of which is incorporated herein by reference.

### BACKGROUND

### Technical Field.

Aspects of the subject matter described herein relate to friction shoes for rail vehicles.

### Discussion of Art.

In a rail vehicle context, friction shoes (e.g., brake shoes or scrubber shoes) may be used for wheel tread conditioning. Tread conditioning involves pressing a friction shoe against the outer peripheral tread surface of a metal rail vehicle wheel for purposes of beneficially treating the tread surface, e.g., rust removal, and mitigating shelling, spalling, and flat spots. Brake shoes are additionally used for friction braking, while scrubber shoes (also referred to as tread conditioning shoes) are typically smaller in size and primarily used for tread conditioning and not friction braking.

Scrubber shoes are generally made of cast iron or a composite material. Cast iron scrubber shoes may work well for tread conditioning, but are heavy, difficult to adjust, can cause wheel hot spots and excessive sparking, and can cause wheel damage if the mechanical properties and composition of the cast iron are not tightly controlled. Composite scrubber shoes (e.g., made of a shaped block of a composite material) are lighter weight and easier to adjust in terms of friction amount, but may not be aggressive enough for a desired level or type of tread conditioning.

It may be desirable to provide a friction shoe for rail vehicle wheel tread conditioning that differs from those currently available.

### BRIEF DESCRIPTION

In an embodiment, a friction shoe includes a backing plate, plural spaced-apart inserts, and a composite body. The backing plate has a top side, an under side, a long axis, and a cross axis that is perpendicular to the long axis. A width of the backing plate along the cross axis is shorter than a length of the backing plate along the long axis. The plural spaced-apart inserts are attached to the under side of the backing plate. The backing plate and plural inserts are integrally formed of a metal material. The composite body is attached to the backing plate and at least partially disposed between and around the plural inserts.

In another embodiment, a friction shoe includes a backing plate, plural spaced-apart inserts, and a composite body. The backing plate has a top side, an under side, a long axis, and a cross axis that is perpendicular to the long axis. A width of the backing plate along the cross axis is shorter than a length of the backing plate along the long axis. The plural spaced-apart inserts are attached to the under side of the backing plate. The backing plate and the plural inserts are integrally made of cast iron. The inserts have respective insert lengths parallel to one another and to the cross axis, and the inserts define respective tread-conditioning end surfaces. The composite body is attached to the backing plate and disposed between the inserts and around a side periphery of the inserts. The composite body defines a bottom surface. The bottom surface of the composite body and the end surfaces of the inserts together define an arcuate friction surface of the friction shoe for engaging a tread surface of a rail vehicle wheel.

### BRIEF DESCRIPTION OF THE DRAWINGS

The present disclosure may be understood from reading the following description of non-limiting embodiments, with reference to the attached drawings, wherein below:
FIG. 1 is a perspective view of an embodiment of a friction shoe;
FIG. 2 is an end view of the friction shoe shown in FIG. 1;
FIG. 3 is a top view of the friction shoe shown in FIG. 1;
FIG. 4 is a bottom view of the friction shoe shown in FIG. 1;
FIG. 5 is a longitudinal sectional view of the friction shoe shown in FIG. 1, taken along line 5-5 in FIG. 1;
FIG. 6 is a partial perspective view of the sectional friction shoe shown in FIG. 5;
FIG. 7 is an end view of an integrated metal portion of the friction shoe shown in FIG. 1, including a backing plate and inserts;
FIG. 8 is a top view of the integrated metal portion shown in FIG. 7;
FIG. 9 is a bottom view of the integrated metal portion shown in FIG. 7;
FIG. 10 is an end view of the integrated metal portion shown in FIG. 7;
FIGS. 11 and 12 are examples of lateral cross sections of the friction shoe shown in FIG. 1, e.g., taken along line 11-11 and line 12-12 in FIG. 4, respectively;
FIG. 13 and FIG. 14 are schematic views of various dimensional aspects of embodiments of the friction shoe (or portions thereof) shown in FIGS. 1-12;
FIG. 15 is a top view of another embodiment of a friction shoe;
FIG. 16 is a side view of the friction shoe shown in FIG. 15;
FIG. 17 is a sectional view of the friction shoe shown in FIG. 15, taken along line A-A in FIG. 15;
FIG. 18 is a sectional view of the friction shoe shown in FIG. 15 and FIG. 16, taken along line B-B in FIG. 15;
FIG. 19 is a sectional view of the friction shoe shown in FIG. 15 and FIG. 16, taken along line C-C in FIG. 16;
FIG. 20 is a lateral section view of the friction shoe shown in FIG. 15 showing a first manufacturing state (insert end surfaces covered by composite material); and
FIG. 21 is a bottom view of the friction shoe shown in FIG. 15, showing a subsequent, second manufacturing state (insert end surfaces externally exposed).

### DETAILED DESCRIPTION

Aspects of the subject matter described herein relate to friction shoes, e.g., a brake shoe for braking and tread conditioning a metal rail vehicle wheel, or a scrubber shoe (also known as tread conditioning shoes) for primarily tread conditioning a metal rail vehicle wheel. (Any frictional interaction between a shoe and a wheel may cause braking, but scrubber shoes are typically sized smaller than brake shoes and thereby insufficient for braking by themselves.) In an embodiment, a friction shoe includes a backing plate, plural spaced-apart inserts, and a composite body. The backing plate has a top side, an under side, a long axis, and a cross axis that is perpendicular to the long axis. A width of the backing plate along the cross axis is shorter than a length of the backing plate along the long axis. The plural spaced-apart inserts are attached to the under side of the backing plate. The backing plate and plural inserts are integrally made of a metal material. The composite body is attached to the backing plate and at least partially disposed between and around the plural inserts.

In embodiments, the integral backing plate and inserts are made of a metal material that includes cast iron. In other embodiments, the integral backing plate and inserts are made only of cast iron, with the possibility of incidental impurities not affecting functioning of the inserts for tread conditioning. Integrally forming the backing plate and inserts from cast iron obviates the need for welding the backing plate and inserts together, which may be impractical if there is relatively close spacing between the inserts. The backing plate and inserts may be integrally formed from cast iron using a casting process, or additive manufacturing, for example.

In embodiments, the composite body is made of a composite material, which may include two or more of a binder (e.g., resin or polymer), graphite particles (e.g., graphite powder or larger graphite particles), metal particles (e.g., metal powder or larger metal particles like metal shavings), natural rock or mineral particles, mineral fibers, or glass fibers. For manufacturing, the composite material may be initially flowable, and pressed, flowed, or otherwise formed into shape against the backing plate and around and between the inserts, followed by heat and/or pressure treatment (or another applicable treating process) to solidify the flowable composite material into a solid composite material block or body.

In embodiments, each of the inserts has a respective insert length parallel to the cross axis of the backing plate, at least one respective insert width parallel to the long axis of the backing plate and perpendicular to the length, and at least one respective insert height extending in a normal direction to the backing plate and perpendicular to the insert length and at least one insert width. (In this context, "at least one" dimension such as width or height means the inserts may taper, e.g., from wider at the base to narrower at the end, and/or from shorter in height at one end to longer in height at the other end.) The inserts may be arrayed parallel to one another relative to their respective insert lengths and parallel to the backing plate cross axis.

In embodiments, the respective insert lengths are shorter than the width of the backing plate along cross axis, and the inserts are alternatingly staggered relative to first and second long edges of the backing plate. Thereby, first side edges of a first plurality of the inserts are closer to the first long edge of the backing plate than first side edges of a second plurality of the inserts, and opposite, second side edges of the first plurality of the inserts are further away from the second long edge of the backing plate than second side edges of the second plurality of the inserts. Such a staggered configuration may facilitate even flowing (or other forming) of the composite material of the composite body between adjacent inserts.

In embodiments, the composite body is disposed between the inserts and around a side periphery of the inserts. The composite body defines a bottom surface, e.g., an exterior surface positioned away from the backing plate, and each of the inserts defines a respective end surface positioned away from the backing plate by a distance corresponding to the respective insert height(s). (E.g., the end surface may be a uniform height away from the backing plate, or the height distance between the end surface and backing plate may vary due to lateral tapering of the end surface.) The bottom surface of the composite body and the end surfaces of the inserts together define an arcuate friction surface of the friction shoe for engaging a tread surface of a rail vehicle wheel, for tread conditioning.

In embodiments, after initial manufacturing, the bottom surface of the composite body may cover the end surfaces of the inserts, so that the end surfaces of the inserts are not externally exposed. In one aspect, as part of the manufacturing process, the composite body may be ground or otherwise machined down to expose the end surfaces of the inserts and form, together with the inserts, the arcuate friction surface. In another aspect, the composite body may be left to initially cover the end surfaces, but wears away during initial use of the friction shoe against the tread surface of a rail vehicle wheel to thereby form a worn-away bottom surface and expose the insert end surfaces. (For example, the composite body may be relatively thin where it covers the insert end surfaces, such as two millimeters thick or less, or one millimeter thick or less, so that it wears away relatively quickly during initial use to expose the inserts.) The worn-away bottom surface and the end surfaces of the inserts thereafter together define the arcuate friction surface for engaging the tread surface of the rail vehicle wheel.

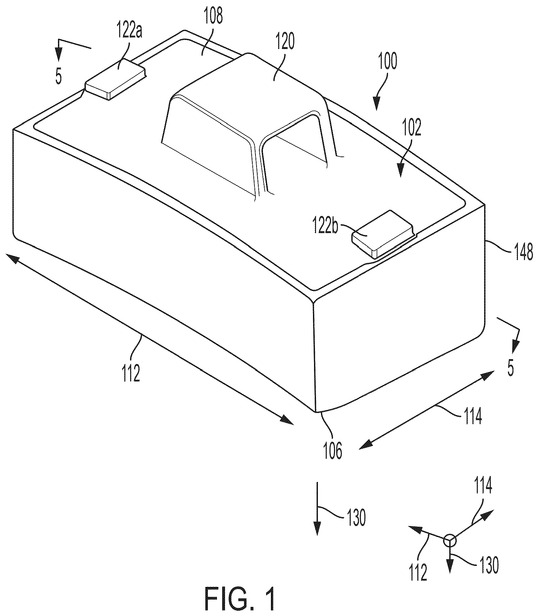

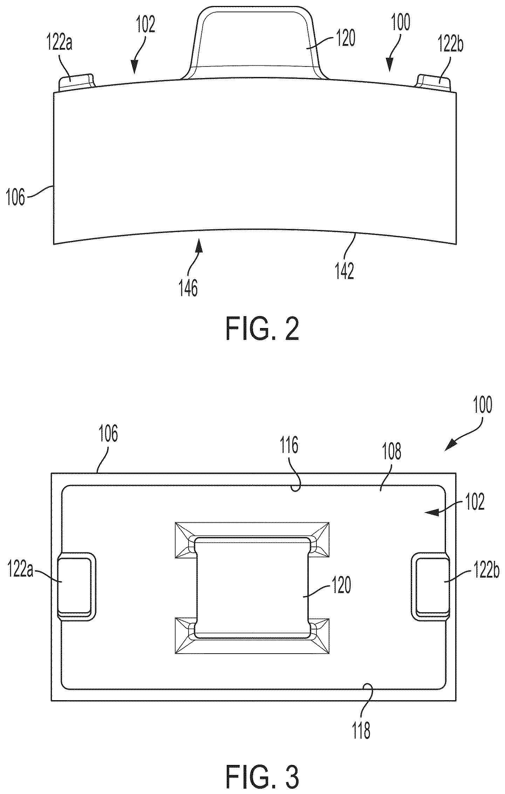

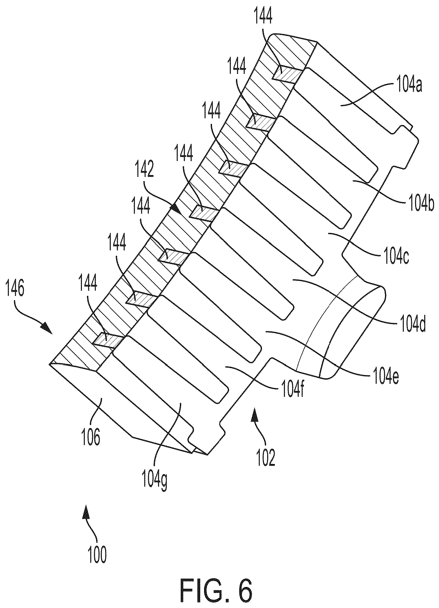

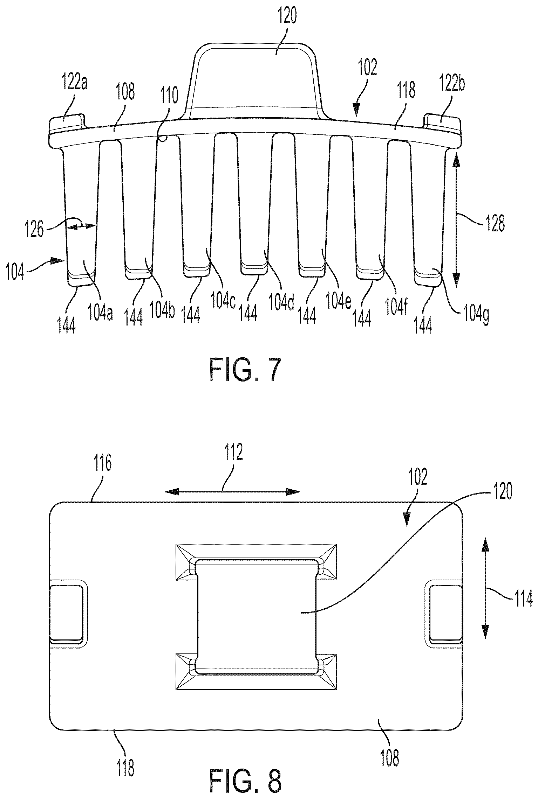

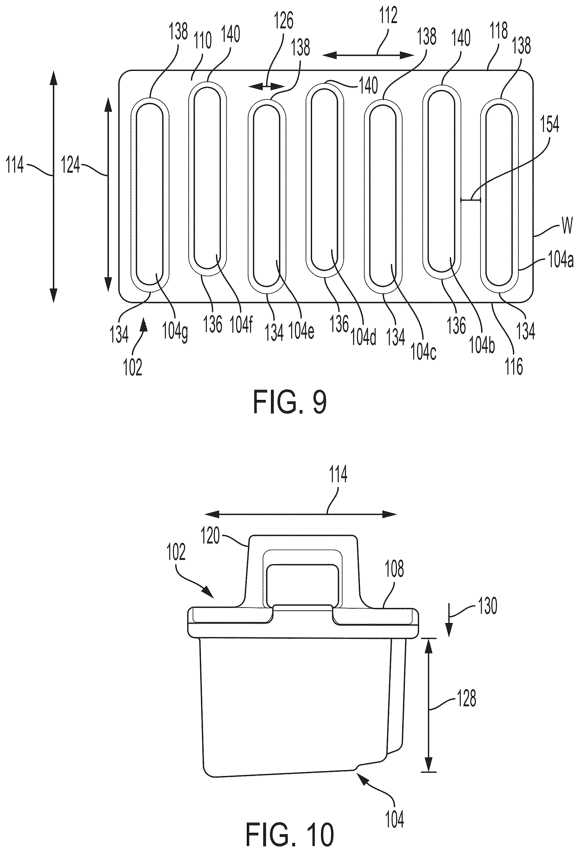

Turning now to the figures, FIGS. 1-14 show aspects of various embodiments of a friction shoe 100 that includes a backing plate 102, plural spaced-apart inserts 104a, 104b, 104c, 104d, 104e, 104f, 104g (collectively 104), and a composite body 106. The backing plate has a top side 108, an under side 110 (see, e.g., FIG. 9), a long axis 112, a cross axis 114 that is perpendicular to the long axis, a first long edge 116, and a second long edge 118. A length of the cross axis is shorter than a length of the long axis, e.g., from a top-down perspective, the backing plate is generally rectangular. The backing plate may be flat (not shown), or it may be arcuate, e.g., curved in the direction of long axis, as best shown in FIGS. 2 and 7. The backing plate may include features integral with the top side 108 for operably interfacing the friction shoe to actuation rigging (e.g., brake rigging), for example a central boss 120 with a hole for receiving a retaining pin, and first and second side guide bosses 122a, 122b. The plural spaced-apart inserts 104 are integrally attached to the under side of the backing plate. The backing plate and plural inserts are integrally made of a metal material. The composite body is attached to the backing plate and at least partially disposed between and around the plural inserts.

As noted above, the integral backing plate 102 and inserts 104 may be made of a metal material that includes cast iron. In other embodiments, the integral backing plate 102 and inserts 104 are made only of cast iron, with the possibility of incidental impurities not affecting functioning of the inserts for tread conditioning. As also noted, the backing plate and inserts may be integrally formed from cast iron using a casting process, or additive manufacturing, for example.

The composite body 106 is made of a composite material. The composite material may include two or more of a binder (e.g., resin or polymer), graphite particles (e.g., graphite powder or larger graphite particles), metal particles (e.g., metal powder or larger metal particles like metal shavings), mineral fibers, or glass fibers.

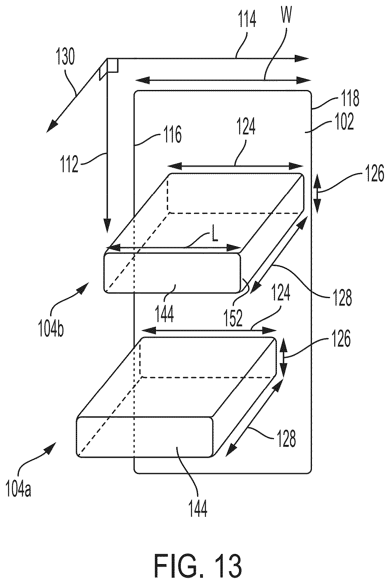

As best shown in FIG. 13 in simplified form, each of the inserts 104 has a respective insert length 124 parallel to the cross axis 114 of the backing plate 102, a respective insert width 126 parallel to the long axis 112 of the backing plate 102 and perpendicular to the length 124, and a respective insert height 128 extending in a normal direction 130 to the backing plate 102 and perpendicular to the insert length 124 and insert width 126. The inserts 104 are arrayed parallel to one another relative to their respective insert lengths 124 and the backing plate cross axis 114. (Although uniform widths and heights are shown in FIG. 13, in embodiments the inserts may taper from wider at the base where integrally connected to the backing plate to narrower at the opposite end, and/or the inserts may taper laterally in terms of height, as described elsewhere herein.)

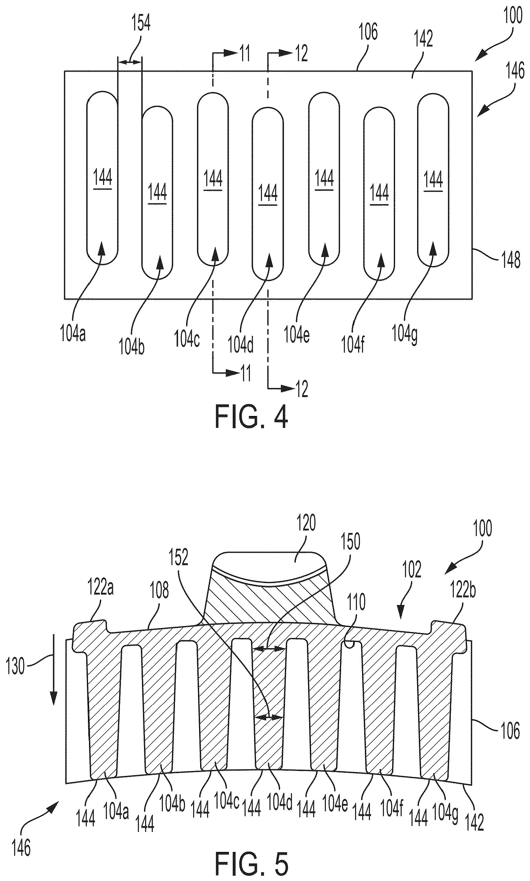

In embodiments, as best shown in FIG. 4 and FIG. 9 (and schematically in FIG. 13), the respective insert lengths 124 may be shorter than the length of the backing plate cross axis 114, and the inserts may be alternatingly staggered relative to the first and second long edges 116, 118 of the backing plate. Thereby, as shown in FIG. 9, first side edges 134 of a first plurality of the inserts 104a, 104c, 104e, 104g are closer to the first long edge 116 of the backing plate than first side edges 136 of a second plurality of the inserts 104b, 104d, 104f, and opposite, second side edges 138 of the first plurality of the inserts are further away from the second long edge 118 of the backing plate than second side edges 140 of the second plurality of the inserts.

In embodiments, the composite body 106 is disposed between the inserts and around a side periphery of the inserts. The composite body defines a bottom surface 142, e.g., an exterior surface positioned away from the backing plate, and each of the inserts defines a respective end surface 144 positioned away from the backing plate by a distance corresponding to its respective insert height(s). (E.g., the end surface may be a uniform height away from the backing plate, or the height distance between the end surface and backing plate may vary due to lateral tapering of the end surface.) The bottom surface of the composite body and the end surfaces of the inserts together define an arcuate friction surface 146 of the friction shoe for engaging a tread surface of a rail vehicle wheel, for tread conditioning, e.g., both the metal insert end surfaces and the composite material around the end surfaces frictionally engage the wheel tread surface for tread conditioning. In this manner, alternating sections of composite material and metal (e.g., cast iron) may achieve both desired characteristics or qualities of metal-on-metal tread conditioning and composite-on-metal tread conditioning, concurrent with less sparking, a lower-weight friction shoe, etc.

In embodiments, as shown in FIG. 1 for example, the composite body 106 surrounds an entire side periphery of the insets, such that the entire external side periphery 148 of the friction shoe (i.e., the external side generally perpendicular to, and extending down from the under side of, the backing plate) is the composite material.

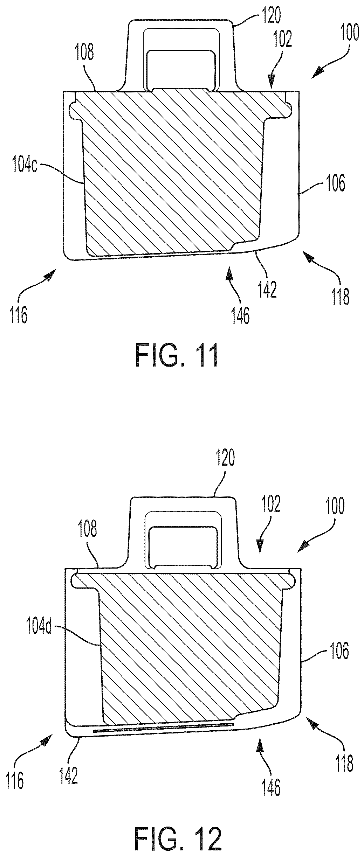

In embodiments, with reference to FIG. 11 and FIG. 12 for example, the arcuate friction surface 146 may taper in a direction extending from the first long edge 116 of the backing plate to the second long edge 118 of the backing plate, e.g., from a 1:19 to a 1:21 taper, or a 1:20 taper. Thereby, when the friction shoe is installed and operated generally normal (perpendicular) to a rail vehicle wheel, the arcuate friction surface may more evenly engage the wheel tread surface, which typically has a degree of conicity.

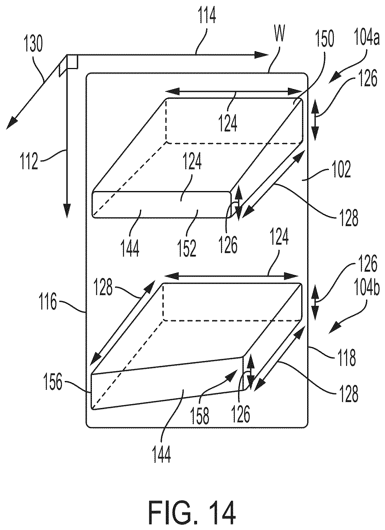

In embodiments, with reference to FIG. 5 and FIG. 14 for example, one or more of the inserts 104 (e.g., all the inserts, or fewer than all of the inserts) may taper in the direction normal 130 to the backing plate 102, with a first lateral cross-sectional area 150 of the insert being larger than a second lateral cross-sectional area 152 of the insert. The first lateral cross-sectional area lies in a first plane perpendicular to the normal direction and the second lateral cross-sectional area lies in a second plane perpendicular to the normal direction, the second plane being further away from the backing plate 102 than the first plane.

In embodiments, the plural inserts 104 are evenly spaced apart from one another along the long axis 112. In an embodiment, a density (number of inserts per unit length) of the plural inserts may be one insert per every two centimeters along the long axis. In another embodiment, a density of the plural inserts may be from four to six inserts per every ten centimeters along the long axis. In another embodiment, a total length of the friction shoe, in the direction of the long axis and including the peripheral portion of the composite body, if any) is about fourteen centimeters (e.g., fourteen centimeters plus or minus one millimeter) and the friction shoe includes seven and only seven of the inserts. Such a configuration (fourteen centimeters and seven inserts) would be suitable, for example, for use as a scrubber shoe for tread conditioning. More generally, however, the aforementioned possible insert densities may reflect one or more of: the spacing between adjacent inserts is relatively narrow; the inserts are generally positioned along an entire length of the friction shoe (as opposed to very large areas of composite material with no inserts); and there is a relatively large number of the inserts for the size of the friction shoe, as may be desirable for metal-on-metal tread conditioning.

In embodiments, relative to the long axis 112, the plural inserts 104 may make up from 35 to 70 percent of the length of the friction shoe and the composite body may make up from 30 to 65 percent of the length of the friction shoe. (In other words, along the friction surface 146 in the direction of the long axis from one end of the friction shoe to the other end, 35 to 70 percent of the length is metal (e.g., cast iron) and 30 to 65 percent of the length is composite material, with a total length of the metal and composite material equaling 100% of the length of the friction shoe, e.g., if 70 percent is metal then 30 percent is composite material.) In other embodiments, the plural inserts 104 may make up from 45 to 60 percent of the length of the friction shoe and the composite body may make up from 40 to 55 percent of the length of the friction shoe. (In other words, along the friction surface 146 in the direction of the long axis from one end of the friction shoe to the other end, 45 to 60 percent of the length is metal (e.g., cast iron) and 40 to 55 percent of the length is composite material, with a total length of the metal and composite material equaling 100% of the length of the friction shoe.) Such relative proportions, distributed in an alternating fashion (e.g., areas of metal that alternate with areas of composite material), may provide a desirable balance of metal-on-metal and composite-on-metal tread conditioning while achieving lower weight, less sparking, desirable friction qualities, etc.

In embodiments, distances 154 (see, e.g., FIG. 4 and FIG. 9) between adjacent ones of the plural inserts, relative to the long axis, are from six millimeters to thirteen millimeters.

In embodiments, a respective total length "L" (see FIG. 13) of the tread-conditioning end surface 152 of one or more of the plural inserts 104, parallel to the backing plate cross axis 114, is from 65 to 85 percent of a total width "W" (see FIG. 13) of the friction shoe along the backing plate cross axis. In other embodiments, the respective total length "L" of the tread-conditioning end surface 152 of one or more of the plural inserts 104, parallel to the backing plate cross axis 114, is from 74 to 76 percent of the total width "W" of the friction shoe along the backing plate cross axis. In embodiments, the total width "W" may be from 70 to 90 millimeters, or from 79 to 81 millimeters.

In embodiments, as shown for example in FIG. 10, FIG. 11, FIG. 12, and relative to the bottom insert 104b shown in FIG. 14 (not to scale), one or more of the inserts may laterally taper, e.g., the end surface 144 of the insert is further away from the backing plate at a first side edge 156 of the insert closer to one long edge 116 of the backing plate than at a second side edge 158 of the insert further away from the one long edge 116. Thereby, the insert has a longer height 128 at the first side edge 156 than at the second side edge 158. Such a tapering may be provided, for example, to accommodate a tapering of the friction surface defined by the insert end surfaces and composite body bottom surface, e.g., so the friction surface is both arcuate relative to the long axis and laterally tapering relative to the cross axis.

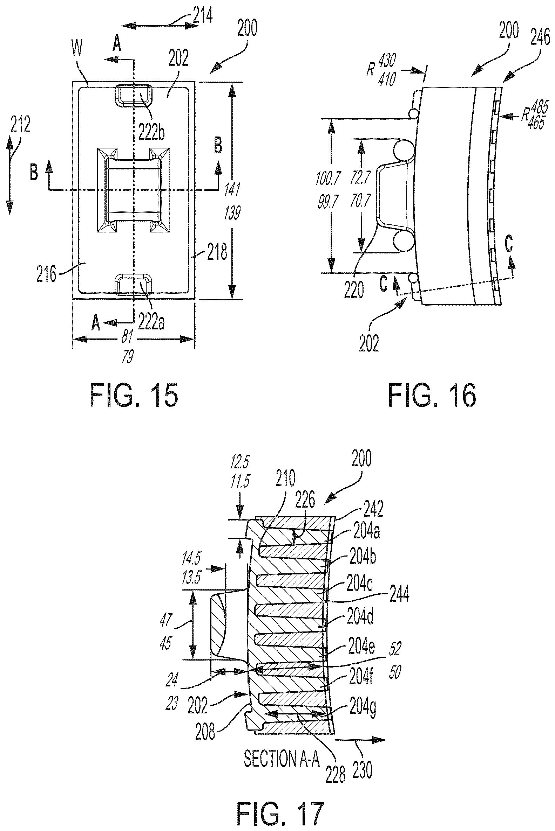

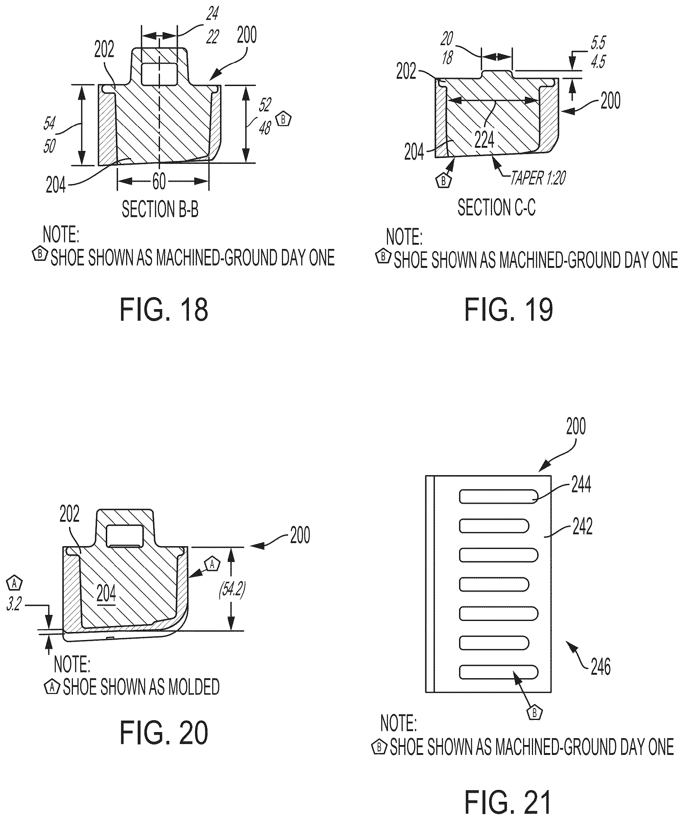

FIGS. 15-21 are directed to various views of another embodiment of a friction shoe 200 (e.g., scrubber shoe, or brake shoe). Throughout FIGS. 15-21, various sample dimensions, or ranges of dimensions, are shown in italics. The dimensions, and ranges of dimensions, are expressed in millimeters except for the taper dimension in FIG. 19. It should be understood that these sample dimensions are provided merely for the purpose of illustration and are not intended to be restrictive.

The friction shoe 200 includes a backing plate 202, plural spaced-apart inserts 204a-204g (collectively, 204), and a composite body 206. The backing plate has a top side 208, an under side 210, a long axis 212, a cross axis 214 that is perpendicular to the long axis, a first long edge 216, and a second long edge 218. A length of the cross axis is shorter than a length of the long axis, e.g., from a top-down perspective, the backing plate is generally rectangular. The backing plate may include features integral with the top side 208 for operably interfacing the friction shoe to actuation rigging (e.g., brake rigging), for example a central boss 220 with a hole for receiving a retaining pin, and first and second side guide bosses 222a, 222b. The plural spaced-apart inserts 204 are integrally attached to the under side of the backing plate. The backing plate and plural inserts are integrally made of a metal material. The composite body is attached to the backing plate and at least partially disposed between and around the plural inserts.

The integral backing plate 202 and inserts 204 may be made of a metal material that includes cast iron. In other embodiments, the integral backing plate 202 and inserts 204 are made only of cast iron, with the possibility of incidental impurities not affecting functioning of the inserts for tread conditioning. As also noted, the backing plate and inserts may be integrally formed from cast iron using a casting process, or additive manufacturing, for example.

The composite body 206 is made of a composite material. The composite material may include two or more of a binder (e.g., resin or polymer), graphite particles (e.g., graphite powder or larger graphite particles), metal particles (e.g., metal powder or larger metal particles like metal shavings), mineral fibers, or glass fibers.

Each of the inserts 204 has a respective insert length 224 parallel to the cross axis 214 of the backing plate 202, a respective insert width 226 parallel to the long axis 212 of the backing plate 202 and perpendicular to the length 224, and a respective insert height 228 extending in a normal direction 230 to the backing plate 202 and perpendicular to the insert length 224 and insert width 226. The inserts 204 are arrayed parallel to one another relative to their respective insert lengths 224 and the backing plate cross axis 214.

In embodiments, the respective insert lengths 224 may be shorter than the width "W" of the backing plate along the cross axis 214, and the inserts may be alternatingly staggered relative to the first and second long edges 216, 218 of the backing plate. Thereby, first side edges of a first plurality of the inserts are closer to the first long edge of the backing plate than first side edges of a second plurality of the inserts, and opposite, second side edges of the first plurality of the inserts are further away from the second long edge of the backing plate than second side edges of the second plurality of the inserts.

In embodiments, the composite body 206 is disposed between the inserts and around a side periphery of the inserts. The composite body defines a bottom surface 242, e.g., an exterior surface positioned away from the backing plate, and each of the inserts defines a respective end surface 244 positioned away from the backing plate by a distance corresponding to its respective insert height(s). (E.g., the end surface may be a uniform height away from the backing plate, or the height distance between the end surface and backing plate may vary due to lateral tapering of the end surface.) The bottom surface of the composite body and the end surfaces of the inserts together define an arcuate friction surface 246 of the friction shoe for engaging a tread surface of a rail vehicle wheel, for tread conditioning, e.g., both the metal insert end surfaces and the composite material around the end surfaces frictionally engage the wheel tread surface for tread conditioning.

The friction shoe 200 shown in FIGS. 15-21 may include additional features or combinations of features as set forth herein relative to the description and drawings of the embodiments of FIGS. 1-14.

In embodiments, a scrubber shoe for tread conditioning a tread surface of a metal rail vehicle wheel includes a backing plate, plural inserts, and a composite body. The backing plate has a top side, an under side, a first long side, a second long side, a long axis, and a cross axis that is perpendicular to the long axis; a length of the cross axis is shorter than a length of the long axis. The inserts are spaced apart from one another, and are attached to the under side of the backing plate. Each of the inserts has a respective insert length parallel to the cross axis of the backing plate, at least one respective insert width parallel to the long axis of the backing plate and perpendicular to the length (e.g., the width may vary for tapering), and at least one respective insert height (e.g., the height may vary for tapering) extending in a normal direction to the backing plate and perpendicular to the insert length and at least one insert width. The inserts are arrayed parallel to one another relative to their respective insert lengths, and each of the inserts defines a respective end surface positioned away from the backing plate by a distance corresponding to the respective at least one insert height. The inserts taper in width in the normal direction, with the inserts being wider closer to the backing plate and narrower at the end surfaces. The backing plate and plural inserts are integrally made of cast iron. The composite body is made of a composite material and attached to the backing plate and at least partially disposed between and around the plural inserts. The bottom surface of the composite body and the end surfaces of the inserts together define an arcuate friction surface of the friction shoe for engaging the tread surface of the rail vehicle wheel. The arcuate friction surface tapers in a direction extending from the first long edge of the backing plate to the second long edge of the backing plate. A respective total length of the end surface of each of the plural inserts, parallel to the backing plate cross axis, is from 65 to 85 percent of a total width of the backing plate along the cross axis, or from 74 to 76 percent of the total width of the backing plate along the cross axis.

In another embodiment of the scrubber shoe, the respective insert lengths are shorter than the length of the backing plate cross axis, and the inserts are alternatingly staggered relative to the first and second long edges of the backing plate, with first side edges of a first plurality of the inserts being closer to the first long edge of the backing plate than first side edges of a second plurality of the inserts, and with opposite, second side edges of the first plurality of the inserts being further away from the second long edge of the backing plate than second side edges of the second plurality of the inserts.

In another embedment, the scrubber shoe is about fourteen centimeters long (along the long axis) (e.g., fourteen centimeters plus or minus one millimeter), and there are seven and only seven of the inserts.

In another embodiment, a friction shoe includes a backing plate and plural inserts. The backing plate and plural inserts are integrally made of a metal material, e.g., cast iron. The backing plate includes a top side, an under side, first and second long edges defining a length of the backing plate along a long axis of the back plate, and first and second side edges defining a width of the backing plate along a cross axis of the backing plate. The width is shorter than the length. The inserts are integrally attached to the underside of the backing plate. The inserts are generally prism-shaped solids, e.g., in effect, each has six faces, eight vertices, and twelve edges. Examples include rectangular prisms (oblique or right), trapezoidal prisms, cuboids, etc., possibly with straight edges or rounded edges. Each insert has a length, a width, and a height. The inserts are parallel to one another relative to their lengths. The lengths are in turn parallel to the backing plate cross axis. (The width dimension of each insert is parallel to the backing plate long axis, and the height dimension of each insert is in a direction normal to the backing plate long axis and cross axis.) The inserts are positioned in an evenly-spaced array from one of the backing plate side edges to the other one of the backing plate side edges. Thus, starting at one of the backing plate side edges and heading towards the other, there is a first cross area (elongate area extending between one of the backing plate long edges to the other and having a longitudinal axis parallel to the backing plate cross axis) with no inserts, then a first one of the inserts (with its length dimension oriented parallel to the backing plate cross axis), then a second cross area with no inserts, then a second one of the inserts (again with its length dimension parallel to the backing plate cross axis), then a third cross area with no inserts, then a third one of the inserts, and so on, until reaching the other side edge of the backing plate terminating at a final cross area with no inserts. Thus, there is an array of parallel inserts having length dimensions parallel to the backing plate cross axis, with the inserts being spaced apart from one another (e.g., evenly spaced) along the direction of the backing plate long axis, and with no inserts located in the spaces between the inserts, and with the inserts distributed (e.g., evenly distributed) along the entire length of the backing plate, e.g., seven inserts in total, or at least seven inserts in total, or one insert per every two centimeters of length of the backing plate. As relating to each cross area of the backing plate occupied by one of the inserts (referring to an area of the backing plate extending between the long edges of the backing plate and bound by two parallel cross axes which are also parallel to the insert length dimension and spaced apart by the longest width dimension of the insert), in embodiments, there may be one and only one insert. The length of each of the inserts may be at least 65% of the length of the backing plate side edges, or at least 75%, or 75% plus or minus 1%. The friction shoe may also include a composite body as described elsewhere herein.

In an embodiment, a friction shoe includes: a backing plate having a top side, an under side, a long axis, and a cross axis that is perpendicular to the long axis, a width of the backing plate along the cross axis being shorter than a length of the backing plate along the long axis; and plural spaced-apart inserts attached to the under side of the backing plate, wherein the backing plate and plural inserts are integrally made of a metal material; and a composite body attached to the backing plate and at least partially disposed between and around the plural inserts.

In another embodiment of the friction shoe, the metal material includes cast iron.

In another embodiment of the friction shoe, the metal material consists of cast iron.

In any of the embodiments of the friction shoe described herein, the composite body may include a composite material, and the composite material may include two or more of a binder, graphite particles, metal particles, mineral fibers, or glass fibers.

In any of the embodiments of the friction shoe described herein, each of the inserts may have a respective insert length parallel to the cross axis of the backing plate, at least one respective insert width parallel to the long axis of the backing plate and perpendicular to the length, and at least one respective insert height extending in a normal direction to the backing plate and perpendicular to the insert length and at least one insert width, and the inserts are arrayed parallel to one another relative to their respective insert lengths.

In any of the embodiments of the friction shoe described herein, the respective insert lengths may be shorter than the width of the backing plate along the cross axis, and the inserts may be alternatingly staggered relative to first and second long edges of the backing plate, with first side edges of a first plurality of the inserts being closer to the first long edge of the backing plate than first side edges of a second plurality of the inserts, and with opposite, second side edges of the first plurality of the inserts being further away from the second long edge of the backing plate than second side edges of the second plurality of the inserts.

In any of the embodiments of the friction shoe described herein, the composite body may be disposed between the inserts and around a side periphery of the inserts, and the composite body may define a bottom surface; each of the inserts defines a respective end surface positioned away from the backing plate by a distance corresponding to the respective at least one insert height; and the bottom surface of the composite body and the end surfaces of the inserts together define an arcuate friction surface of the friction shoe for engaging a tread surface of a rail vehicle wheel.

In any of the embodiments of the friction shoe described herein, the composite body may be disposed between the inserts and around a side periphery of the inserts, and the composite body may define a bottom surface; each of the inserts defines a respective end surface positioned away from the backing plate by a distance corresponding to the respective at least one insert height; and the bottom surface of the composite body covers the end surfaces of the inserts and is configured to wear away during initial use of the friction shoe against the tread surface of a rail vehicle to thereby expose the end surfaces and form a worn-away bottom surface, wherein the worn-away bottom surface and the end surfaces of the inserts thereafter together define an arcuate friction surface of the friction shoe for engaging the tread surface of the rail vehicle wheel.

In any of the embodiments of the friction shoe described herein, the arcuate friction surface may taper in a direction extending from the first long edge of the backing plate to the second long edge of the backing plate.

In any of the embodiments of the friction shoe described herein, each of the inserts may taper in the normal direction to the backing plate, with a first lateral cross-sectional area of the insert being larger than a second lateral cross-sectional area of the insert, the first lateral cross-sectional area lying in a first plane perpendicular to the normal direction and the second lateral cross-sectional area lying in a second plane perpendicular to the normal direction, the second plane being further away from the backing plate than the first plane.

In any of the embodiments of the friction shoe described herein, the plural inserts may be evenly spaced apart from one another along the long axis, and a density of the plural inserts may be one of: one insert per every two centimeters along the long axis; or from four to six inserts per every ten centimeters along the long axis; or a length of the long axis is about fourteen centimeters and the plural inserts consist of seven inserts.

In any of the embodiments of the friction shoe described herein, relative to the long axis, the plural inserts may make up from 35 to 70 percent of the length of the friction shoe and the composite body may make up from 30 to 65 percent of the length of the friction shoe.'

In any of the embodiments of the friction shoe described herein, relative to the long axis, the plural inserts may make up from 45 to 60 percent of the length of the friction shoe and the composite body may make up from 40 to 55 percent of the length of the friction shoe.

In any of the embodiments of the friction shoe described herein, distances between adjacent ones of the plural inserts, relative to the long axis, may be from six millimeters to thirteen millimeters.

In any of the embodiments of the friction shoe described herein, a respective total length of a tread-conditioning end surface of each of the plural inserts, parallel to the backing plate cross axis, may be from 65 to 85 percent of a total width of the backing plate along the direction of the cross axis.

In any of the embodiments of the friction shoe described herein, the respective total length of the tread-conditioning end surface of each of the plural inserts, along the backing plate cross axis, may be from 74 to 76 percent of the total width of the backing plate along the direction of the cross axis.

In any of the embodiments of the friction shoe described herein, the total width may be from 70 to 90 millimeters, or from 79 to 81 millimeters.

In any of the embodiments of the friction shoe described herein, each of the inserts may have a respective insert length parallel to the cross axis of the backing plate, at least one respective insert width parallel to the long axis of the backing plate and perpendicular to the length, and at least one respective insert height extending in a normal direction to the backing plate and perpendicular to the insert length and the at least one insert width, and the inserts are parallel to one another relative to their respective insert lengths; the composite body is disposed between the inserts and around a side periphery of the inserts, and the composite body defines a bottom surface; each of the inserts defines a respective end surface positioned away from the backing plate by at least one distance corresponding to the respective at least one insert height; and a respective total length of the end surface of each of the plural inserts, parallel to the backing plate cross axis, is from 65 to 85 percent of a total length of the backing plate cross axis.

In any of the embodiments of the friction shoe described herein, the respective total length of the end surface of each of the plural inserts, parallel to the backing plate cross axis, may be from 74 to 76 percent of a total length of the backing plate cross axis.

In any of the embodiments of the friction shoe described herein, the friction shoe may include no tread conditioning inserts other than the plural spaced-apart inserts as defined in said either of clauses 18 or 19.

In any of the embodiments of the friction shoe described herein, distances between adjacent ones of the plural inserts, relative to the long axis, may be from six millimeters to thirteen millimeters.

In an embodiment, a scrubber shoe for tread conditioning a tread surface of a metal rail vehicle wheel may include: a backing plate having a top side, an under side, a first long side, a second long side, a long axis, and a cross axis that is perpendicular to the long axis, a width of the backing plate along the cross axis being shorter than a length of the backing plate along the long axis; plural spaced-apart inserts attached to the under side of the backing plate, wherein each of the inserts has a respective insert length parallel to the cross axis of the backing plate, at least one respective insert width parallel to the long axis of the backing plate and perpendicular to the length, and at least one respective insert height extending in a normal direction to the backing plate and perpendicular to the insert length and at least one insert width, and the inserts are arrayed parallel to one another relative to their respective insert lengths, and each of the inserts defines a respective end surface positioned away from the backing plate by a distance corresponding to the respective at least one insert height, wherein the inserts taper in width in the normal direction, the inserts being wider closer to the backing plate and narrower at the end surfaces, wherein the backing plate and plural inserts are integrally made of cast iron; and a composite body comprising a composite material and attached to the backing plate and at least partially disposed between and around the plural inserts, wherein the bottom surface of the composite body and the end surfaces of the inserts together define an arcuate friction surface of the friction shoe for engaging the tread surface of the rail vehicle wheel, wherein the arcuate friction surface tapers in a direction extending from the first long edge of the backing plate to the second long edge of the backing plate, wherein a respective total length of the end surface of each of the plural inserts, parallel to the backing plate cross axis, is from 65 to 85 percent of a total width of the backing plate along the cross axis, or from 74 to 76 percent of the total width of the backing plate along the cross axis.

In any of the embodiments of the scrubber shoe described herein, the respective insert lengths may be shorter than the width of the backing plate along the cross axis, and the inserts may be alternatingly staggered relative to the first and second long edges of the backing plate, with first side edges of a first plurality of the inserts being closer to the first long edge of the backing plate than first side edges of a second plurality of the inserts, and with opposite, second side edges of the first plurality of the inserts being further away from the second long edge of the backing plate than second side edges of the second plurality of the inserts.

In any of the embodiments of the scrubber shoe described herein, the scrubber shoe may be further modified as per any of the embodiments of the friction shoe described herein.

In embodiments, a friction shoe may include: a backing plate having a top side, an under side, a long axis, and a cross axis that is perpendicular to the long axis, a width of the backing plate along the cross axis being shorter than a length of the backing plate along the long axis; and plural spaced-apart inserts attached to the under side of the backing plate, wherein the backing plate and plural inserts are integrally made of cast iron, wherein the inserts have respective insert lengths parallel to one another and to the cross axis, and wherein the inserts define respective tread-conditioning end surfaces; and a composite body attached to the backing plate and disposed between the inserts and around a side periphery of the inserts, and the composite body defines a bottom surface, wherein the bottom surface of the composite body and the end surfaces of the inserts together define an arcuate friction surface of the friction shoe for engaging a tread surface of a rail vehicle wheel.

In any of the embodiments of the friction shoe described herein, the inserts may be evenly spaced apart from one another along the long axis, and wherein distances between adjacent ones of the plural inserts, relative to the long axis, may be from six millimeters to thirteen millimeters.

In any of the embodiments of the friction shoe described herein, a respective total length of the end surface of each of the plural inserts, parallel to the backing plate cross axis, may be from 65 to 85 percent of a total length of the backing plate cross axis.

In any of the embodiments of the friction shoe described herein, the respective total length of the end surface of each of the plural inserts, parallel to the backing plate cross axis, may be from 74 to 76 percent of a total length of the backing plate cross axis.

In any of the embodiments of the friction shoe described herein, the inserts may be alternatingly staggered relative to first and second long edges of the backing plate that are parallel to the long axis, with first side edges of a first plurality of the inserts being closer to the first long edge of the backing plate than first side edges of a second plurality of the inserts, and with opposite, second side edges of the first plurality of the inserts being further away from the second long edge of the backing plate than second side edges of the second plurality of the inserts.

In any of the embodiments of the friction shoe (e.g., scrubber shoe) described herein, the backing plate may be arcuate in shape, e.g., curved in the direction of the long axis.

Embodiments may be described in connection with a rail vehicle system, such as a locomotive or switcher, or other types of vehicle systems, such as automobiles, trucks (with or without trailers), buses, marine vessels, aircraft, unmanned aircraft (e.g., drones), mining vehicles, agricultural vehicles, or other off-highway vehicles. Vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers), or virtually or logically coupled but not mechanically coupled. For example, vehicles may be logically but not mechanically coupled when the separate vehicles communicate with each other to coordinate movements of the vehicles with each other so that the vehicles travel together (e.g., as a convoy, swarm, consist, platoon). Calculations and computations, such as navigation processes, may be performed on-board the vehicle systems or off-board the vehicle systems and then communicated to the vehicle systems. Whether on-board or off-board, a vehicle control system may operate a vehicle system and receive and process sensor inputs, operator inputs, operational parameters, vehicle parameters, and route parameters, etc.

One or more components may be described as "configured to," "configurable to," "operable/operative to," "adapted/adaptable to," or similar terms. Unless explicitly stated, these terms encompass components in both active and inactive states. Unless stated otherwise, terms like "including" or "having" should be interpreted as open-ended (i.e., "including but not limited to"). Numeric recitations generally mean "at least" the stated number, and disjunctive terms like "A or B" should be interpreted to include either or both unless explicitly specified. Recited operations may generally be performed in any order unless explicitly stated. The recitation "at least one of A, B, and C" should be interpreted as any combination of A, B, and C, such A alone, B alone, C alone, A and B together, A and C together, B and C together, and/or A, B, and C together. The recitation "at least one of A, B, or C" should be interpreted to include A alone, B alone, C alone, A and B together, A and C together, B and C together, and/or A, B, and C together.

This written description may disclose several embodiments of the subject matter, including the best mode, and may enable one of ordinary skill in the relevant art to practice the embodiments of subject matter, including making and using any devices or systems and performing any incorporated methods.

## Claims

1. A friction shoe comprising:
a backing plate having a top side, an under side, a long axis, and a cross axis that is perpendicular to the long axis, a width of the backing plate along the cross axis being shorter than a length of the backing plate along the long axis; and
plural spaced-apart inserts attached to the under side of the backing plate, wherein the backing plate and plural inserts are integrally made of a metal material; and
a composite body attached to the backing plate and at least partially disposed between and around the plural inserts.

2. The friction shoe of claim 1, wherein the metal material comprises cast iron.

3. The friction shoe of claim 1, wherein the composite body comprises a composite material, and the composite material comprises two or more of a binder, graphite particles, metal particles, mineral fibers, or glass fibers.

4. The friction shoe of claim 1, wherein:
each of the inserts has a respective insert length parallel to the cross axis of the backing plate, at least one respective insert width parallel to the long axis of the backing plate and perpendicular to the insert length, and at least one respective insert height extending in a normal direction to the backing plate and perpendicular to the insert length and at least one insert width, and the inserts are arrayed parallel to one another relative to their respective insert lengths.

5. The friction shoe of claim 4, wherein the respective insert lengths are shorter than the width of the backing plate along the cross axis, and the inserts are alternatingly staggered relative to first and second long edges of the backing plate, with first side edges of a first plurality of the inserts being closer to the first long edge of the backing plate than first side edges of a second plurality of the inserts, and with opposite, second side edges of the first plurality of the inserts being further away from the second long edge of the backing plate than second side edges of the second plurality of the inserts.

6. The friction shoe of claim 4, wherein:
the composite body is disposed between the inserts and around a side periphery of the inserts, and the composite body defines a bottom surface;
each of the inserts defines a respective end surface positioned away from the backing plate by a distance corresponding to the respective at least one insert height; and
the bottom surface of the composite body and the end surfaces of the inserts together define an arcuate friction surface of the friction shoe for engaging a tread surface of a rail vehicle wheel.

7. The friction shoe of claim 6, wherein:
the backing plate has a first long edge and a second long edge; and
the arcuate friction surface tapers in a direction extending from the first long edge to the second long edge.

8. The friction shoe of claim 4, wherein:
the composite body is disposed between the inserts and around a side periphery of the inserts, and the composite body defines a bottom surface;
each of the inserts defines a respective end surface positioned away from the backing plate by a distance corresponding to the respective at least one insert height; and
the bottom surface of the composite body covers the end surfaces of the inserts and is wears away during initial use of the friction shoe against the tread surface of a rail vehicle to thereby expose the end surfaces and form a worn-away bottom surface, wherein the worn-away bottom surface and the end surfaces of the inserts thereafter together define an arcuate friction surface of the friction shoe for engaging the tread surface of the rail vehicle wheel.

9. The friction shoe of claim 4, wherein each of the inserts tapers in the normal direction to the backing plate, with a first lateral cross-sectional area of the insert being larger than a second lateral cross-sectional area of the insert, the first lateral cross-sectional area lying in a first plane perpendicular to the normal direction and the second lateral cross-sectional area lying in a second plane perpendicular to the normal direction, the second plane being further away from the backing plate than the first plane.

10. The friction shoe of claim 1, wherein the plural inserts are evenly spaced apart from one another along the long axis, and a density of the plural inserts is one of: one insert per every two centimeters along the long axis; or from four to six inserts per every ten centimeters along the long axis; or a length of the long axis is about fourteen centimeters and the plural inserts consist of seven inserts.

11. The friction shoe of claim 1, wherein relative to the long axis, the plural inserts make up from 35 to 70 percent of the length of the friction shoe and the composite body makes up from 30 to 65 percent of the length of the friction shoe.

12. The friction shoe of claim 1, wherein a respective total length of a tread-conditioning end surface of each of the plural inserts, parallel to the backing plate cross axis, is from 65 to 85 percent of a total width of the backing plate along the direction of the cross axis.

13. The friction shoe of claim 1, wherein:
each of the inserts has a respective insert length parallel to the cross axis of the backing plate, at least one respective insert width parallel to the long axis of the backing plate and perpendicular to the length, and at least one respective insert height extending in a normal direction to the backing plate and perpendicular to the insert length and the at least one insert width, and the inserts are parallel to one another relative to their respective insert lengths;
the composite body is disposed between the inserts and around a side periphery of the inserts, and the composite body defines a bottom surface;
each of the inserts defines a respective end surface positioned away from the backing plate by at least one distance corresponding to the respective at least one insert height; and
a respective total length of the end surface of each of the plural inserts, parallel to the backing plate cross axis, is from 65 to 85 percent of a total length of the backing plate cross axis.

14. The friction shoe of claim 13, wherein the respective total length of the end surface of each of the plural inserts, parallel to the backing plate cross axis, is from 74 to 76 percent of a total length of the backing plate cross axis.

15. A scrubber shoe for tread conditioning a tread surface of a metal rail vehicle wheel, comprising:
a backing plate having a top side, an under side, a first long edge, a second long edge, a long axis, and a cross axis that is perpendicular to the long axis, a width of the backing plate along the cross axis being shorter than a length of the backing plate along the long axis;
plural spaced-apart inserts attached to the under side of the backing plate, wherein each of the inserts has a respective insert length parallel to the cross axis of the backing plate, at least one respective insert width parallel to the long axis of the backing plate and perpendicular to the length, and at least one respective insert height extending in a normal direction to the backing plate and perpendicular to the insert length and at least one insert width, and the inserts are arrayed parallel to one another relative to their respective insert lengths, and each of the inserts defines a respective end surface positioned away from the backing plate by a distance corresponding to the respective at least one insert height,
wherein the inserts taper in width in the normal direction, the inserts being wider closer to the backing plate and narrower at the end surfaces,
wherein the backing plate and plural inserts are integrally made of cast iron; and
a composite body comprising a composite material and attached to the backing plate and at least partially disposed between and around the plural inserts, wherein the bottom surface of the composite body and the end surfaces of the inserts together define an arcuate friction surface of the friction shoe for engaging the tread surface of the rail vehicle wheel, wherein the arcuate friction surface tapers in a direction extending from the first long edge of the backing plate to the second long edge of the backing plate,
wherein a respective total length of the end surface of each of the plural inserts, parallel to the backing plate cross axis, is from 65 to 85 percent of a total width of the backing plate along the cross axis.

16. The scrubber shoe of claim 15, wherein the respective insert lengths are shorter than the width of the backing plate along the cross axis, and the inserts are alternatingly staggered relative to the first and second long edges of the backing plate, with first side edges of a first plurality of the inserts being closer to the first long edge of the backing plate than first side edges of a second plurality of the inserts, and with opposite, second side edges of the first plurality of the inserts being further away from the second long edge of the backing plate than second side edges of the second plurality of the inserts.

17. A friction shoe comprising:
a backing plate having a top side, an under side, a long axis, and a cross axis that is perpendicular to the long axis, a width of the backing plate along the cross axis being shorter than a length of the backing plate along the long axis; and
plural spaced-apart inserts attached to the under side of the backing plate, wherein the backing plate and plural inserts are integrally made of cast iron, wherein the inserts have respective insert lengths parallel to one another and to the cross axis, and wherein the inserts define respective tread-conditioning end surfaces; and
a composite body attached to the backing plate and disposed between the inserts and around a side periphery of the inserts, and the composite body defines a bottom surface, wherein the bottom surface of the composite body and the end surfaces of the inserts together define an arcuate friction surface of the friction shoe for engaging a tread surface of a rail vehicle wheel.

18. The friction shoe of claim 17, wherein a respective total length of the end surface of each of the plural inserts, parallel to the backing plate cross axis, is from 65 to 85 percent of a total length of the backing plate cross axis.

19. The friction shoe of claim 18, wherein:
the backing plate has a first long edge and a second long edge;
the inserts are alternatingly staggered relative to first and second long edges of the backing plate that are parallel to the long axis, with first side edges of a first plurality of the inserts being closer to the first long edge of the backing plate than first side edges of a second plurality of the inserts, and with opposite, second side edges of the first plurality of the inserts being further away from the second long edge of the backing plate than second side edges of the second plurality of the inserts.

20. The friction shoe of claim 17, wherein the backing plate is arcuate in shape, curved in the direction of the long axis.
